# FASCICULE DE BREVET EUROPEEN

(11) **EP 1 896 199 B1**
(45) Date de publication et mention de la délivrance du brevet: **21.02.2018**
(21) Numéro de dépôt: 06763661.3
(22) Date de dépôt: 13.06.2006
(51) Int. Cl.: B09B 3/00, B09C 1/02, B22C 5/18

(54) **PROCEDE DE RECUPERATION D'ARGILE, EN PARTICULIER PROVENANT DE SABLES DE FONDERIE ET DE TERRES INDUSTRIELLES A ASSAINIR**
VERFAHREN ZUR RÜCKGEWINNUNG VON INSBESONDERE AUS GIESSEREIFORMSAND UND ZU REINIGENDEN INDUSTRIEGELÄNDEN STAMMENDEM TON
METHOD FOR RECOVERING CLAY IN PARTICULAR DERIVED FROM FOUNDRY SANDS AND INDUSTRIAL LANDS TO BE CLEANED UP

(30) Priorité: 14.06.2005 BE 200500300
(43) Date de publication de la demande: 12.03.2008
(73) Titulaire: Fontaine, Albert, 4170 Comblain-au-Pont (BE)
(72) Inventeur: Fontaine, Albert, 4170 Comblain-au-Pont (BE)
(74) Mandataire: Claeys, Pierre
(86) Numéro de dépôt international: PCT/EP2006/063134
(87) Numéro de publication internationale: WO 2006/134099

(56) Documents cités:
- EP-A- 0 185 831
- US-A- 5 540 270

## Description

La présente invention se rapporte à un procédé de récupération d'argile provenant d'une matière première contaminée contenant de l'argile.

La présente invention concerne plus particulièrement le domaine de la valorisation des déchets de fonderie et le domaine de l'assainissement des sols et terres contaminés.

Dans le cas de la fonderie, ces matières premières contaminées sont les déchets de sable de fonderie non recyclables, notamment les rejets de sable de moulage, de noyautage et de moulage qui contiennent du sable lié à de l'argile, et qui peuvent être valorisés par le procédé selon l'invention.

Actuellement, ces industries de fonderie ont d'importantes quantités de déchets de sable, provenant principalement du procédé de moulage de sable lié à l'argile.

Ces matières premières contaminées proviennent des différents postes de moulage, de décochage, de noyautage, des filtres d'aspiration, des installations de grenaillage et des résidus au sol.

Ces matières premières contaminées sont généralement mises en décharge ce qui représente un coût important pour l'entreprise.

En ce qui concerne les sols et terres contaminés, ils proviennent généralement d'anciens terrains industriels désaffectés. Pour pouvoir vendre ces terrains, le propriétaire doit absolument l'assainir, sans quoi il n'est pas possible de le vendre.

Avec les Règles Antipollution élaborées par la Communauté Internationale, qui, selon la tendance actuelle, deviennent de plus en plus strictes, la mise en décharge des matériaux contaminés représente de plus en plus un coût difficile à supporter pour les entreprises. Ces règles visent à obliger les industriels dans tous les domaines à diminuer les émissions de polluants quels qu'ils soient et dès lors, les déchets sont de plus en plus chers à mettre en décharge pour pousser les industriels à trouver des solutions au problème de l'émission et du rejets des polluants et contaminants divers.

Il y a donc une demande, autant pour la fonderie que pour l'assainissement des sols et terres contaminés, d'un procédé permettant de réduire la quantité de déchets à mettre en décharge tout en permettant une récupération de la matière première. En effet, en général, les matières premières contaminées représentent un volume de matière énorme qui engendre un coût de mise en décharge très élevé.

C'est la présence des résidus tels que le phénol, les isocyanates, les esters, les oxydes, les hydrocarbures, les métaux lourds et autres produits polluants qui déterminent la classe du dépôt, au plus le produit à mettre en décharge est polluant, au plus la classe de déchet est élevée et au plus le coût de cet entreposage est élevé.

En conséquence, l'entreposage dans des décharges, en raison des problèmes de choix de sites, d'environnement et d'écologie, devient de plus en plus délicat et difficile. Il s'ensuit que des budgets importants de transport de ces matières et de paiement de redevances de décharges doivent être prévus.

Actuellement, il existe diverses solutions de traitement des déchets, mais ces solutions ne sont pas écologiques et de manière générale, sont limitées par d'autres problèmes.

Par exemple, il existe des installations de traitement thermique des déchets, qui, pour la plupart, les incinèrent, mais la combustion des déchets entraîne un dégagement important de produits polluants divers, ce qui nécessite un traitement coûteux des rejets de combustion.

D'autres installations utilisent le lavage de déchets pour enlever une partie contaminante des déchets, par exemple par une percolation, un lavage simple ou d'autres techniques similaires, mais ces techniques sont toutes basées sur un entraînement de contaminants ou une solubilisation de certaines substances dans l'eau par lavage de la matière contaminée.

Le traitement biologique est un autre exemple de traitement de déchets, mais il est limité par la nature et la quantité de polluant dans les terres ou les sols.

En outre, pour pouvoir se plier au nouvelles règles éditées par la Communauté Internationale, un tel procédé doit être écologique, c'est-à-dire qu'il ne doit pas déplacer le problème en produisant d'autres polluants, par exemple par une utilisation de produits chimiques divers ou en provoquant des émissions polluantes, par exemple provenant de la combustion de déchets.

A titre d'exemple, on connaît un procédé de récupération de matière première de sable de fonderies (voir le brevet US 5 540 270). Ce procédé comprend une addition d'eau au matériau granuleux brut, une attrition humide de celui-ci, c'est-à-dire une usure progressive causée par le frottement, une séparation en fonction de la taille en deux flux de particules en suspension, une addition au flux de particules ayant la taille de particule la plus petite d'un agent de floculation.

Comme il est mentionné dans ce document, la quantité d'eau est comprise entre 50% et 20% afin d'assurer l'application du frottement de la manière la plus intense possible. L'agitation violente dans les cellules d'attrition élimine les fines particules se trouvant à la surface du sable (notamment l'argile). Celles-ci constituent donc le flux de particules ayant la taille de particule la plus petite alors que le sable constitue le deuxième flux.

Un tel procédé n'a pour but que de récupérer le sable, l'argile se trouvant dans le flux de particules ayant la taille de particule la plus petite est complètement détruit pas l'addition de l'agent de floculation. De plus, ce procédé utilise des agents d'ajustement de pH et des agents de floculation ainsi que divers additifs qui ne font que déplacer le problème des polluants à traiter.

Le présent procédé a pour but de pallier les inconvénients des solutions actuelles de traitement de matière première contaminée en proposant un procédé écologique et fiable de revalorisation qui soit peu coûteux à mettre en oeuvre et à utiliser.

A cette fin, le procédé comprend:
* une élimination à partir de la matière première contaminée des matériaux contaminants non liés à l'argile,
* un malaxage de la matière première contaminée, débarrassée des matériaux contaminants non liés, avec de l'eau, effectué de manière à obtenir un mélange d'eau, de résidus de matière première appauvris en argile et d'argile, l'étape de malaxage ayant lieu dans un rapport pondéral matière première/eau allant de 1/1 à 1/8,
* une séparation à partir de ce mélange d'une suspension d'argile dans l'eau, d'une part, et des résidus de matière première appauvris en argile, d'autre part, et
* à partir de ladite suspension, une récupération séparée de l'argile et de l'eau.

Suivant l'invention, le procédé a lieu sans traitement chimique, ni introduction de polluants supplémentaires. Le procédé selon l'invention repose, au contraire de l'état antérieur de la technique, sur la séparation d'une suspension aqueuse et non sur un lavage de l'argile. En outre, de cette façon, si certains déchets résultants du procédé selon l'invention nécessitent encore une mise en décharge parce qu'ils contiennent des polluants qui ne pourront être recyclés dans des étapes ultérieures, la quantité devant être mise en décharge sera bien moindre puisqu'une grande partie de la matière première est récupérée et cela diminuera les coûts de mise en décharge et les coûts engendrés par l'achat de la matière première.

Par exemple, dans le cas de la fonderie, la matière première contaminée est du sable de fonderie lié à de l'argile qui provient de moules de fonderie et les résidus de matière première issus de ladite séparation sont constitués de sable sensiblement exempt d'argile.

Dans ce cas de figure, le fait que la matière première contaminée soit malaxée avec une très grande quantité d'eau permet la formation d'une suspension d'argile dans l'eau. Lors de la séparation subséquente, il est alors prévu de récupérer cette suspension d'argile finement dispersée dans de l'eau et séparément d'une phase solide contenant le sable. Cela est rendu possible par la différence de taille granulométrique bien connue qui existe entre l'argile et le sable.

Dans une étape ultérieure, le sable sensiblement exempt d'argile est ensuite séché, traité à chaud, refroidi, dépoussiéré et tamisé en vue d'un recyclage dans une fabrication de moules. Le recyclage du sable permet un gain substantiel à la fonderie. En effet, par un tel recyclage, le sable, même s'il contient encore après le traitement par le procédé selon l'invention, quelques métaux, ceci n'est pas gênant pour sa réutilisation dans la fabrication des moules.

Avantageusement, le malaxage est un malaxage abrasif qui dure entre 15 et 30 minutes. Le malaxage abrasif est une étape clé du procédé selon l'invention dans le cas du traitement des déchets de fonderie. En effet, en fonderie, la matière première contaminée est pratiquement uniquement constituée d'argile, de sable, de carbone, de liants divers et de quelques métaux résiduels résultant de l'utilisation des moules. La grande difficulté est donc de séparer le sable de l'argile, puisqu'ils sont liés ensemble par des liants divers tels que des liants minéraux et organiques comme de la résine phénolique, furannique, des esters, des polyuréthannes, des alkydes, et autres liants connus. Comme on l'a mentionné ci-avant, il est prévu selon l'invention de ne pas ajouter de substances chimiques, dès lors de prévoir un procédé permettant la séparation de l'argile et du sable sans utilisation d'agents chimiques.

De manière surprenante, par la mise au point de ce malaxage abrasif, les constituants de la matière première contaminée et en particulier les particules de sable exercent une action de frottement l'une sur l'autre et ceci a pour effet de détacher l'argile du sable par abrasion, les liants étant récupérés dans l'eau. Il est important de permettre que cette abrasion optimale puisse se faire suffisamment longtemps pour assurer un détachement de l'argile du sable. La période de temps nécessaire est de 15 à 30 minutes. Dès lors, lors de l'étape de séparation ultérieure, il est possible de récupérer le sable en tant que phase solide et l'argile dispersée dans l'eau sous la forme d'une suspension, grâce à la grande quantité d'eau utilisée, l'eau contenant également les liants divers. Le carbone éventuellement présent, est également finement dispersé dans l'eau.

Comme mentionné précédemment, l'eau dans laquelle l'argile et le carbone, et éventuellement d'autres particules fines, sont dispersés, est ensuite soumise à son tour à une séparation, de préférence par décantation. La décantation permet de récupérer, dans le bas du bassin de décantation, l'argile, les éventuelles particules fines et le carbone, l'eau sera récupérée dans le haut du bassin et sera réintroduite dans le procédé au niveau du malaxage. La partie sédimentée récupérée dans la bas du bassin de décantation pourra ensuite être pressée, séchée ou subir d'autres traitements équivalents pour permettre d'obtenir un mélange d'argile, de carbone et d'autres particules fines éventuelles, réutilisable dans la fabrication des moules.

Dans certains cas, cette partie sédimentée récupérée pourrait s'avérer trop polluée et elle sera dès lors envoyée en décharge, mais la quantité envoyée à la décharge dans ce cas sera bien moindre que si toute la matière première contaminée y avait été envoyée. En effet, cette partie sédimentée représente entre 1 et 25 % en poids de la matière première contaminée.

En outre, il est également possible de prévoir une décantation préalable de la suspension d'argile dans l'eau d'une durée inférieure à une limite de temps prédéterminée correspondant au temps nécessaire à la sédimentation d'argile pur, ce qui permettra de récupérer séparément de l'argile épurée et une argile éventuellement alourdie par des contaminants divers.

Dans le cas de terres industrielles à assainir, la matière première contaminée est une terre provenant d'un site industriel qui est chargé de contaminants.

Avantageusement, il est prévu selon l'invention de réaliser un une élimination à partir de la matière première contaminée des matériaux contaminants non liés à l'argile, avant le malaxage. Cette élimination sépare et élimine les contaminants trouvés dans les terres industrielles tels que des pièces métalliques, des morceaux de bois, du papier, des gros cailloux, etc.

Dans certaines formes de réalisation, il peut être avantageux de réaliser une élimination comprenant plusieurs criblages, un premier criblage qui élimine tout ce qui a une taille supérieure à 150 mm et ensuite un deuxième criblage qui laisse passer tout ce qui est inférieur à 25 mm. Ce double criblage peut éventuellement être réalisé par une seule étape de criblage au moyen d'un tapis vibrant à deux étages.

Dans certaines formes de réalisation, il pourra être avantageux de faire passer les terres contaminées sur des convoyeurs permettant à des ouvriers de trier les déchets.

Avant de réaliser le malaxage, il peut également être avantageux de réaliser un tri supplémentaire avec un tamis vibrant comprenant une ouverture de 6 mm .

Une première partie récupérée sera d'un calibre entre 6 et 25 mm et sera transférée sur un convoyeur muni d'un overband afin d'éliminer toutes les matières ferreuses et magnétiques. Eventuellement, en cas de grandes pollutions par des déchets, un tri manuel sera également effectué par les ouvriers.

Une deuxième partie récupérée présentera des particules d'un calibre compris entre 0 et 6 mm, cette partie sera malaxée avec une grande quantité d'eau.

Le malaxage permet de séparer les hydrocarbures, les métaux lourds et autres polluant de la terre. Après le malaxage, on récupère le produit malaxé et on réalise l'étape de séparation.

Dans une forme de réalisation particulière, le malaxage dure entre deux et cinq minutes et de préférence, entre deux et trois minutes. Cet intervalle de temps permet de mettre l'argile en suspension dans l'eau.

Avantageusement, la séparation de la suspension d'argile dans l'eau, d'une part, et des résidus de matière première appauvris en argile, d'autre part, est un tamisage calibré à 1 mm.

Dans cette forme de réalisation, la séparation sera par exemple un tamisage permettant de séparer d'un côté la fraction inférieure à 1 mm qui sera constituée de l'argile finement dispersé dans l'eau et d'un autre coté, par exemple les résidus qui auront un calibre supérieur à 1 mm.

Dans les procédés connus qui sont basés sur un lavage de matière contaminée, comme mentionné ci-avant, on obtient uniquement de l'eau contenant certains contaminants soit solubilisés, soit entraînés, mais en aucun cas, il ne serait possible de récupérer séparément l'argile du sable, puisque dans ce cas, ils seraient tous deux dans la phase solide.

Avantageusement, le procédé comprend une séparation additionnelle est réalisée avant ladite récupération séparée de l'argile et de l'eau, ladite séparation additionnelle permettant d'isoler des pierrailles de petit calibre, des métaux lourds et d'autres contaminants présents ayant une densité et une masse volumique supérieures à celles de l'argile.

En effet, par cette séparation préalable qui est de préférence une décantation basée sur la sédimentation différentielle des éléments, il est possible de récupérer dans le fond du bassin, les déchets tels que les pierrailles de petit calibre, les métaux lourds et autres contaminants présents dont la densité et la masse volumique est supérieure à celle de l'argile.

L'argile, si cette décantation ne dure pas plus de 6-7 heures n'aura pas le temps de sédimenter. Dès lors, la partie supérieure du bassin de décantation est une fraction contenant essentiellement de l'argile et de l'eau. Cette fraction sera soumise à la décantation prévue précédemment qui fourni une fraction d'argile et une fraction d'eau.

Avantageusement, l'eau sera réintroduite dans le procédé au niveau du malaxage.

Dans une forme de réalisation préférentielle, l'argile récupérée est ensuite séchée avant d'être réintroduit sur ledit site. En effet, dans la plupart des applications, l'argile récupéré dans le fond du bassin de décantation est suffisamment propre pour être réintégré sur le site, par exemple après un séchage, qui peut être un séchage à air chaud conventionnel, un pressage, etc. Un dispositif pour la mise en oeuvre du procédé, par exemple du procédé appliqué en fonderie, peut comprendre:
* des moyens d'élimination de matériaux contaminants non liés à l'argile, dans lesquels la matière première contaminée est débarrassée des matériaux contaminants non liés,
* un malaxeur, alimenté en ladite matière première contaminée issue des moyens d'élimination de matériaux contaminants non liés et en eau,
* des moyens de séparation, reliés au malaxeur et permettant de séparer une suspension d'argile dans l'eau et une phase solide contenant lesdits résidus de matière première appauvris en argile, et
* des moyens de traitement de suspension pour recevoir ladite suspension d'argile dans l'eau et récupérer séparément l'argile de l'eau.

Avantageusement, le malaxeur est de type pétrin et comporte une cuve et au moins deux bras de pétrissage transversaux rotatifs.

En outre, les bras de pétrissage sont espacés l'un de l'autre d'une distance comprise entre 1 et 10 mm, de préférence entre 1 et 7 mm, en fonction de la taille de particule de la matière première contaminée.

Comme on l'a mentionné précédemment, le malaxage dans une application en fonderie est une étape cruciale. Dès lors, il a été nécessaire de trouver des moyens permettant de réaliser un malaxage abrasif, permettant uniquement la séparation du sable de l'argile, sans que les particules malaxées soient broyées, le tout avec un mélange constitué en grande partie d'eau. Le mélange sera constitué d'un peu plus d'eau en poids que de matière première contaminée, par exemple de 51% d'eau, de 55% d'eau, de 60 % d'eau, de 65% d'eau, de 70 % d'eau jusque 80% d'eau en fonction du type d'argile à récupérer.

A cette fin, il est prévu d'utiliser un malaxeur de type pétrin de boulangerie comportant une cuve de malaxage et au moins deux bras transversaux rotatifs. Ceci est particulièrement surprenant, parce que ce type de malaxeur aurait été préalablement proscrit. En effet, il était logique que les malaxeurs conventionnels de type malaxeur de boue épaisse soient non conseillés puisque le produit à malaxer est relativement liquide.

Les bras transversaux emprisonnent, de par la distance qui les sépare une quantité de matière à malaxer et les particules sont uniquement frottées l'une contre l'autre, sans être broyées et le mélange obtenu est suffisamment homogène pour l'utilisation du produit malaxé dans les étapes ultérieure.

D'autres formes de réalisation du procédé suivant l'invention sont indiquées dans les revendications annexées.

D'autres caractéristiques, détails et avantages de l'invention ressortiront de la description donnée ci-après, à titre non limitatif et en faisant référence aux dessins annexés.
La figure 1 est une vue schématique du procédé selon l'invention pour une application dans le traitement de sables de fonderie.
La figure 2 est une vue schématique du procédé selon l'invention pour une application dans le traitement de sols ou terres à assainir provenant de sites industriels.

Sur les figures, les éléments identiques ou analogues portent les mêmes références.

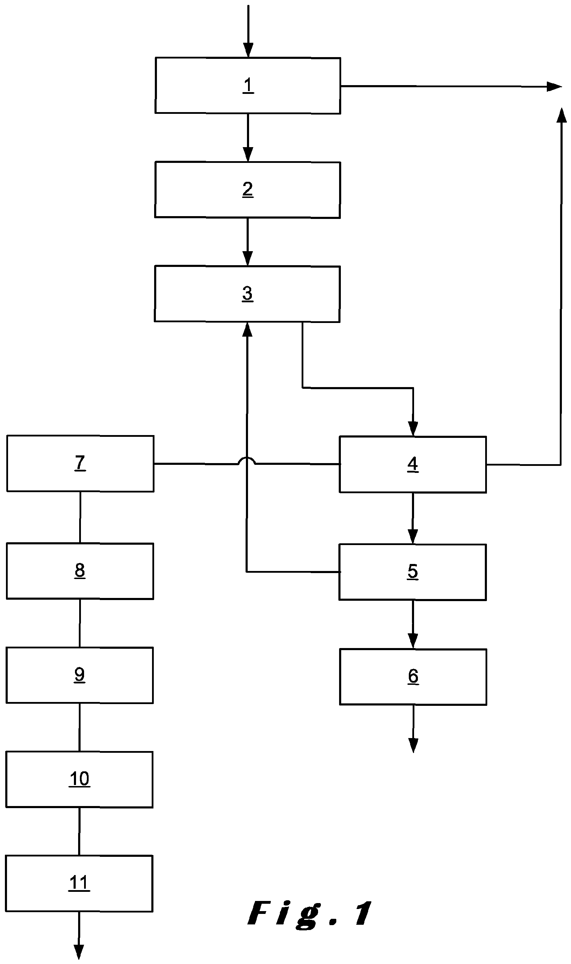

Comme on peut le voir à la figure 1, Le sable de fonderie lié à l'argile et chargé de contaminants divers est amené dans des moyens d'élimination 1 de contaminants non liés à l'argile. Ces moyens d'élimination 1 laissent passer toute matière dont la taille de particule est inférieure à une limite prédéterminée et peuvent être choisis parmi un crible, un tamis, un trieur, un convoyeur, ou tout type d'appareillage similaire qui permette d'éliminer des contaminants non liés à la matière première contaminée ou encore une combinaison de ces derniers.

Le sable de fonderie lié à l'argile contenant encore des déchets dont la taille est inférieure à la limite prédéterminée est entreposé dans une trémie de distribution ou d'entreposage 2 qui est reliée au malaxeur 3. Le sable de fonderie lié à l'argile est alimenté de la trémie de distribution 2 dans le malaxeur 3 qui également comprend une entrée d'eau.

Le malaxeur 3 comprend, dans la forme de réalisation particulière illustrée à la figure 1, liée à une utilisation en fonderie, deux bras de pétrissage transversaux rotatifs, de préférence horizontaux. L'eau est alimentée dans le malaxeur 3 à raison d'un rapport pondéral matière première/eau de permettant d'obtenir un mélange constitué de 51 % à 80 % en poids d'eau.

En fonderie, la matière première contaminée est pratiquement uniquement constituée d'argile, de sable, de carbone, de liants divers et de quelques métaux résiduels résultant de l'utilisation des moules. La grande difficulté est donc de séparer le sable de l'argile, puisqu'ils sont liés ensemble par des liants divers tels que des liants minéraux et organiques comme de la résine phénolique, furannique, des esters, des polyuréthannes, des alkydes, et autres liants connus.

Les bras transversaux sont espacés d'une distance comprise dans la plage allant de 1 à 10 mm, de préférence de 1 à 7 mm l'un de l'autre et également du fond de la cuve de malaxage. Cette petite distance entre les bras de pétrissage permet d'emprisonner la matière et que les particules de sable exercent l'une sur l'autre une action de frottement qui aura pour résultat de détacher l'argile du sable par abrasion. Il est important de permettre que cette abrasion optimale puisse se faire suffisamment longtemps pour assurer un détachement de l'argile du sable. La période de temps nécessaire est de 15 à 30 minutes.

On récupère donc à la sortie du malaxeur 3 un mélange d'eau, d'argile, de sable, et de contaminants divers.

Le dispositif selon l'invention comprend également des moyens de séparation 4 reliés au malaxeur 3. Les moyens de séparation 4 sont par exemple un filtre ou un tamis. Les moyens de séparation 4 sont alimentés par le mélange susdit.

Dans le cas d'un tamis vibrant ou d'un filtre, celui-ci sera choisi de telle manière que la suspension d'argile dans l'eau puisse passer au travers puisqu'elle possède une taille de particule très petite. Dans cette suspension d'argile dans l'eau, on trouvera également éventuellement des fines particules, du carbone et les liants. Le mélange de sable et des déchets sera par exemple séparé dans un autre filtre qui permettra le passage du sable et retiendra les déchets.

Le sable pourra dès lors subir un autre traitement en vue de sa récupération, les déchets sont également récupérés pour un traitement ultérieur, voire une mise à la décharge si nécessaire et la suspension d'argile dans l'eau sera traitée ultérieurement.

Il est clair pour l'homme de métier que diverses techniques de séparation peuvent être utilisées à cette fin, on peut par exemple imaginer que les moyens de séparation 4 sont un filtre double étage, un tamis vibrant également à double étage, une série de divers moyens de séparation 4 utilisés l'un après l'autre.

Avantageusement, il est prévu que le malaxeur 3 comprenne des moyens de séparation 4 intégrés, comme par exemple des sorties criblées ou non qui permettent par exemple que l'argile dispersée dans l'eau sorte à un premier endroit, que le sable dans de l'eau sorte à un deuxième endroit et les gros déchets à un troisième endroit. Il se pourrait également qu'uniquement la suspension d'argile dans l'eau puisse sortir en continu du malaxeur 3 et que le mélange sable et déchets soit trié et séparé ultérieurement.

Le sable est donc récupéré à la sortie des moyens de séparation 4.

Dans une forme de réalisation particulière, le sable sera séché à l'aide de moyens de séchage 7, par exemple d'un four de séchage 7 à une température comprise entre 85 et 200° C. Ensuite, ensuite le sable sera refroidi par des moyens de refroidissement 9, par exemple un échangeur de chaleur conventionnel, dépoussiéré par des moyens de dépoussiérage 10, par exemple à l'aide d'une soufflante, et ensuite tamisé par des moyens de tamisage ou de criblage 11 pour obtenir une répartition granulométrique conforme à la demande de l'utilisateur.

A ce stade, le sable présente des caractéristiques suffisantes pour être récupéré la fabrication de moules.

Dans une forme particulière d'application en fonderie, l'invention a également pour objet la récupération du sable de quartz pour être réutilisé dans un sable de moulage lié à l'argile.

Comme on l'a dit précédemment, selon le type de fonderie et le type de noyau utilisé dans la fonderie, il peut y avoir un mélange entre du sable lié à l'argile et des noyaux liés avec de la résine phénolique, de la résine furannique, du polyuréthane, des alkydes, des esters, des silicates, etc.

Il peut donc y avoir certains de ces résidus dans le sable. Après passage dans le sécheur 7, il peut être nécessaire d'effectuer un traitement thermique du sable compris entre 585 et 615°C dans un four 8. Cette opération permet de nettoyer complètement le sable des résidus de coke, de résine, et de liants divers.

A la sortie du four de traitement thermique 8, le sable est refroidi, dépoussiéré et placé soit en silos soit en dépôt au sol.

La présente invention s'applique également à des systèmes de sable d'olivine, de magnolhite, de chromite, de zircon, ou autre composant connu.

La suspension d'argile dans l'eau, contenant éventuellement d'autres particules fines est ensuite soumise à son tour à une récupération d'argile, de préférence par décantation, dans des moyens de récupération d'argile 5, par exemple dans au moins un bassin de décantation 5. La décantation permet de récupérer, dans le bas du bassin de décantation 5, l'argile, les éventuelles particules fines et le carbone, l'eau sera récupérée dans le haut du bassin et sera réintroduite dans le malaxeur 3.

La partie sédimentée récupérée dans la bas du bassin de décantation 5 contenant principalement de l'argile pourra ensuite être pressée, séchée ou subir d'autres traitements équivalents dans des appareils tels qu'une presse, un sécheur ou analogue, représentés en 6 à la figure 1. L'argile récupéré à cet endroit, éventuellement chargé de particules fines ou de carbone est suffisamment propre pour être réutilisable dans la fabrication des moules.

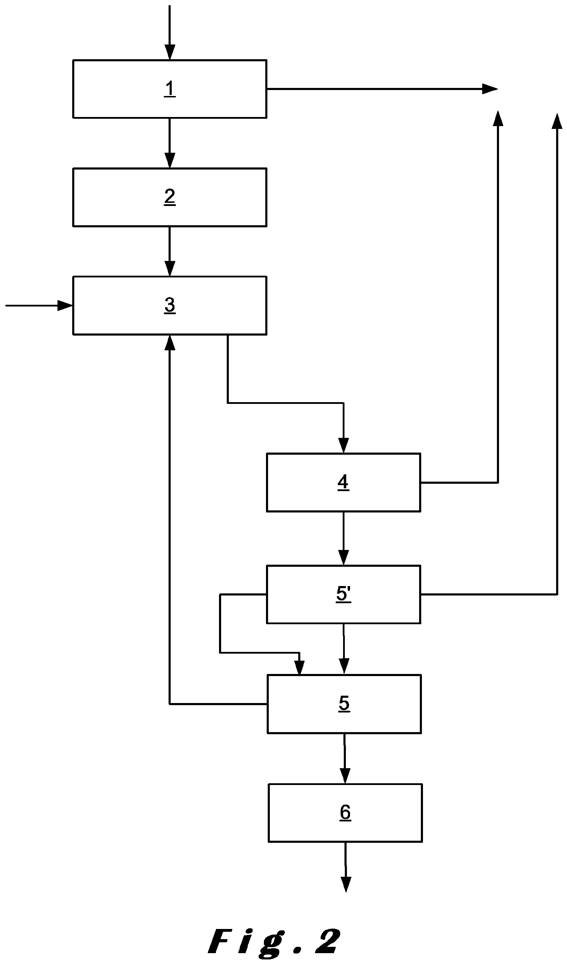

A la figure 2, les sols ou terres industrielles à traiter sont également alimentés dans un moyen de séparation 4, permettant un triage de contaminants divers.

Comme précédemment, ces moyens de séparation 4 peuvent être une série de plusieurs moyens de criblage, de tamisage, de triage, comme une bande transporteuse permettant un tri manuel, un tamis vibrant à double étage, etc.

Par exemple, la terre est enlevée par un bull. et est amenée sur un tamis vibrant de triage à deux étages. Le tamis vibrant supérieur retient tout ce qui est supérieur à 150 mm, et l'inférieur laisse passer tout ce qui est inférieur à 25 mm.

Dans certains cas de figure, de grosses pierres sont éliminées, et elle seront avantageusement lavées et la boue attachée récupérée pour son traitement dans le procédé selon l'invention. Dès lors, il est prévu également dans certains de ces cas de figure un système d'arrosage sous pression avec de l'eau et de récupération de l'eau et de la terre.

Dans une forme de réalisation particulière, après ce premier tri, il peut être nécessaire d'effectuer un tri supplémentaire avec un tamis vibrant comprenant une ouverture de 6 mm, donc, la fraction sortant des moyens de séparation 1 aura de préférence un calibre inférieur à 6 mm et sera stockée dans une trémie de distribution ou d'entreposage 2 avant d'être amenée dans le malaxeur 3.

Il est également prévu que la partie comprise entre 0 et 6 mm qui sort des moyens de séparation 1 passe au travers d'un overband de séparation magnétique dont la fréquence sera adaptée à l'extraction des métaux ferreux et magnétiques, puis dans une deuxième installation permettant la séparation des métaux non ferreux par courant de Foucault avant d'être entreposé dans la trémie de distribution 2 et d'être amené dans le malaxeur 3.

La terre ou les sols sont par exemple envoyés dans le malaxeur 3 à l'aide de bandes à bord, de transports pneumatiques ou de trémies de pesage selon les possibilités de l'exploitation.

Le malaxeur 3 est conçu de manière à mélanger la terre et les sols avec de l'eau afin d'homogénéiser le mélange pour séparer les hydrocarbures, les métaux lourd et autres polluant et peut être dans ce cas, de n'importe quel type de malaxeur connu.

Avantageusement, le malaxage dure entre 1 et 5 minutes, et de préférence entre 2 et 3 minutes.

Le mélange est réalisé avec des proportions d'eau par rapport au produit de 1 à 8 fois, ce qui signifie que pour 1000 KG de terre et de sols, et selon la quantité d'argile qu'ils contiennent, de 1000 à 8000 litres d'eau seront utilisés.

Le malaxeur 3 effectue le nettoyage de tous les grains de silice ainsi que des terres pour obtenir une dilution complète des parties fines dans l'eau. Le contenu du malaxeur est, dans la forme de réalisation illustrée envoyé dans des moyens de séparation 4. Comme mentionné précédemment, il est également concevable que le malaxeur 3 comprennent diverses sorties permettant la sortie d'une suspension d'argile dans l'eau, et des déchets d'autre part, ou encore plusieurs sorties permettant à diverses fractions granulométriques d'être amenées pour un traitement ultérieur dans une autre installation. De préférence, soit les moyens de séparation 4, soit le malaxeur 3 comprennent une sortie calibrée à 1 mm qui permet la sortie de la suspension d'argile dans l'eau.

La fraction d'un calibre compris entre 1 et 6 mm sera normalement nettoyée, c'est-à-dire, par exemple, la fraction sera tamisée à l'aide d'un trommel dont la vitesse est calculée pour éliminer le maximum d'eau et conserver un produit faiblement chargé en eau.

La fraction dont les particules ont une taille inférieure à 1 mm, qui comprend donc principalement la suspension d'argile dans l'eau est ensuite envoyée dans les moyens de traitement de la suspension d'argile dans l'eau, par exemples dans un bassin de décantation.

Dans le traitement des terres industrielles, il est avantageux que le dispositif selon l'invention comprennent au moins deux bassins de décantation 5 et 5'. Dans le premier bassin de décantation 5', la suspension d'argile dans l'eau sera laissée à sédimenter pendant un intervalle de temps restreint, par exemple compris entre 6 et 7 heures. De cette façon, les particules lourdes, l'argile chargée de contaminants, par exemple de métaux lourds ou autres, sédimentera plus vite et l'argile propre n'aura pas le temps de se retrouver au fond du bassin de décantation 5'. Ensuite, cette partie surnageante sera transférée dans un deuxième bassin de décantation 5 afin que l'argile puisse être récupérée.

L'argile récupérée est ensuite séchée ou pressée en 6 et l'eau récupérée des bassins de décantation est introduite dans le malaxeur. L'eau pouvant contenir des hydrocarbures et d'autres polluants qui se trouvaient dans la terre industrielle à traiter peut être avantageusement traitée par un système de filtration pour être débarrassée de ces polluants.

Il peut également être avantageux que le dispositif selon l'invention comprenne une série de bassin de décantation 5 pour que le système puisse travailler en continu.

Dès lors, les terres nettoyées et dépolluées seront remises en place sur le terrain à traiter

### EXEMPLES

### Exemple 1.-

Un sable de fonderie lié à l'argile qui contenait 8,5 % d'argile a été traité par le dispositif selon l'invention, celui-ci présentait une perte au feu de 1,4 % et une granulométrie de 63 AFS.

Après lavage et malaxage, nous avons obtenu un sable qui ne contenait plus que 0,7 % de fines, 0,2 % de perte au feu, et une granulométrie de 66 AFS.

L'ensemble des déchets divers représente de 15 à 25 % de la quantité de départ de sable de fonderie lié à l'argile. Le pourcentage d'argile récupéré variait entre 3 et 15 % du déchet de sable de fonderie.

### Exemple 2.-

Pour les terres et sols, des essais sur des produits qui contenaient des hydrocarbures et des métaux lourds ont été réalisés.

La teneur en hydrocarbure et en métaux lourds a été réduite pour obtenir un résultat dans les normes établies et le pourcentage de terre ou de sols récupérés varie entre 88 et 95 % soit de 5 à 12 % de polluants qui ont été éliminés.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé de récupération d'argile provenant d'une matière première contaminée contenant de l'argile, comprenant:
* une élimination (1) à partir de la matière première contaminée des matériaux contaminants non liés à l'argile,
* un malaxage (3) de la matière première contaminée, débarrassée des matériaux contaminants non liés, avec de l'eau, effectué de manière à obtenir un mélange d'eau, de résidus de matière première appauvris en argile et d'argile, l'étape de malaxage ayant lieu dans un rapport pondéral matière première/eau de 1/1 à 1/8,
* une séparation (4) à partir de ce mélange d'une suspension d'argile dans l'eau, d'une part, et des résidus de matière première appauvris en argile, d'autre part, et
* à partir de ladite suspension, une récupération séparée de l'argile et de l'eau,
**caractérisé en ce que** ledit procédé a lieu sans traitement chimique, ni introduction de polluants supplémentaires.

2. Procédé selon la revendication 1, dans lequel la matière première contaminée est du sable de fonderie lié à de l'argile qui provient de moules de fonderie et les résidus de matière première issus de ladite séparation sont constitués de sable sensiblement exempt d'argile.

3. Procédé selon la revendication 2, dans lequel ledit sable exempt d'argile est ensuite séché, traité à chaud, refroidi, dépoussiéré et tamisé (7-11) en vue d'un recyclage dans une fabrication des moules susdits.

4. Procédé selon l'une quelconque des revendications précédentes, dans lequel le malaxage (3) est un malaxage abrasif.

5. Procédé selon l'une quelconque des revendications précédentes, dans lequel le malaxage (3) dure entre 15 et 30 minutes.

6. Procédé selon l'une quelconque des revendications précédentes, dans lequel l'argile récupérée est (ré)introduite dans une fabrication de moules.

7. Procédé selon la revendication 1, dans lequel la matière première contaminée est une terre provenant d'un site industriel qui est chargé de contaminants.

8. Procédé selon la revendication 1 ou 7, dans lequel le malaxage (3) dure entre 2 et 5 minutes, de préférence de 2 à 3 minutes.

9. Procédé selon l'une quelconque des revendications 1, 7 et 8, dans lequel la séparation (4) de la suspension d'argile dans l'eau, d'une part, et des résidus de matière première appauvri en argile, d'autre part, est un tamisage calibré à 1 mm.

10. Procédé selon l'une quelconque des revendications 1 et 7 à 9, dans lequel une séparation additionnelle est réalisée avant ladite récupération séparée de l'argile et de l'eau, ladite séparation additionnelle permettant d'isoler des pierrailles de petit calibre, des métaux lourds et d'autres contaminants présents ayant une densité et une masse volumique supérieures à celles de l'argile.

11. Procédé selon l'une des revendications 7 à 10, dans lequel l'argile récupérée est ensuite séchée (6) avant d'être réintroduite sur ledit site.

12. Procédé selon l'une quelconque des revendications 1 à 11, **caractérisé en ce que** l'étape de récupération comprend une décantation (5,5') de la suspension d'argile dans l'eau.

13. Procédé suivant l'une quelconque des revendications 1 à 12, **caractérisé en ce que** le mélange de l'étape de malaxage est constitué de 51% à 80% d'eau, de préférence de 55%, avantageusement de 70% d'eau.

## Patentansprüche

1. Verfahren zur Rückgewinnung von Ton aus einem tonhaltigen Ausgangsmaterial, welches Folgendes umfasst:
* eine Ausscheidung (1) aus dem kontaminierten Ausgangsmaterial der nicht an den Ton gebundenen kontaminierenden Materialien,
* eine Mischung (3) des kontaminierten Ausgangsmaterials, befreit von den nicht gebundenen kontaminierenden Materialien, mit Wasser, so ausgeführt, um eine Mischung aus Wasser, Rückständen des an Ton abgereicherten Ausgangsmaterials und Ton zu erhalten, wobei der Schritt der Mischung in einem Gewichtsverhältnis Ausgangsmaterial:Wasser von 1:1 bis 1:8 stattfindet,
* eine Abscheidung (4) ausgehend von dieser Mischung einer Suspension von Ton in Wasser einerseits und den Rückständen des an Ton abgereicherten Ausgangsmaterials andererseits, und
* ausgehend von der erwähnten Suspension, eine getrennt Rückgewinnung von Ton und Wasser,
**dadurch gekennzeichnet, dass** das erwähnte Verfahren ohne chemische Behandlung oder Zuführung zusätzlicher Schadstoffe verläuft.

2. Verfahren nach Anspruch 1, in dem das kontaminierte Ausgangsmaterial an Ton gebundener Gießereiformsand ist, der aus Gießereiformen stammt, und die Rückstände des Ausgangsmaterials, die aus der erwähnten Abscheidung stammen, aus Sand bestehen, der deutlich frei von Ton ist.

3. Verfahren nach Anspruch 2, in dem der erwähnte tonfreie Sand danach im Hinblick auf eine Wiederverwertung in einer Herstellung der oben erwähnten Formen getrocknet, wärmebehandelt, abgekühlt, entstaubt und gesiebt (7-11) wird.

4. Verfahren nach irgendeinem der vorigen Ansprüche, in dem die Mischung (3) eine abrasive Mischung ist.

5. Verfahren nach irgendeinem der vorigen Ansprüche, in dem die Mischung (3) zwischen 15 und 30 Minuten dauert.

6. Verfahren nach irgendeinem der vorigen Ansprüche, in dem der zurückgewonnene Ton (wieder) der Herstellung von Formen zugeführt wird.

7. Verfahren nach Anspruch 1, in dem das kontaminierte Ausgangsmaterial Erde von einem Industriegelände ist, das mit Kontaminanten belastet ist.

8. Verfahren nach Anspruch 1 oder 7, in dem die Mischung (3) zwischen 2 und 5 Minuten dauert, bevorzugt von 2 bis 3 Minuten.

9. Verfahren nach irgendeinem der Ansprüche 1, 7 und 8, in dem die Abscheidung (4) der Suspension von Ton in Wasser einerseits und der Rückstände des an Ton abgereicherten Ausgangsmaterials andererseits ein auf 1 mm kalibriertes Sieben ist.

10. Verfahren nach irgendeinem der Ansprüche 1 und 7 bis 9, in dem eine zusätzliche Abscheidung vor der erwähnten getrennten Rückgewinnung von Ton und Wasser durchgeführt wird, wobei es die erwähnte zusätzliche Abscheidung erlaubt, Kies geringer Korngröße, Schwermetalle und andere vorhandene Kontaminanten mit einer Dichte und einer Massendichte über jeder des Tons zu isolieren.

11. Verfahren nach einem der Ansprüche 7 bis 10, in dem der zurückgewonnene Ton danach getrocknet wird (6), bevor er wieder in das erwähnte Gelände eingebracht wird.

12. Verfahren nach irgendeinem der Ansprüche 1 bis 11, **dadurch gekennzeichnet, dass** der Schritt der Rückgewinnung eine Klärung (5, 5') der Suspension von Ton in Wasser umfasst.

13. Verfahren nach irgendeinem der Ansprüche 1 bis 12, **dadurch gekennzeichnet, dass** der Schritt der Mischung aus 51 % bis 80 % Wasser besteht, bevorzugt aus 55 %, vorteilhafterweise aus 70 % Wasser.

## Claims

1. Method for recovering clay coming from a contaminated raw material containing clay, comprising:
* elimination (1), from the contaminated raw material, of the contaminating materials not bound to the clay,
* mixing (3) of the contaminated raw material, with the non-bound contaminating materials removed, with water, carried out so as to obtain a mixture of water, residues of clay-depleted raw material and clay, the mixing step taking place in a ratio by weight of raw material to water of 1/1 to 1/8,
* separation (4), from this mixture, of a suspension of clay in water on the one hand and residues of clay-depleted raw material on the other hand, and
* from said suspension, separate recovery of the clay and water,
**characterised in that** said method takes place without chemical treatment or the introduction of additional contaminants.

2. Method according to claim 1, in which the contaminated raw material is foundry sand bound to the clay, which comes from foundry moulds, and the residues of raw material issuing from said separation consist of sand substantially free from clay.

3. Method according to claim 2, in which said sand free from clay is next dried, treated hot, cooled, de-dusted and sieved (7-11) with a view to recycling in manufacture of the aforementioned moulds.

4. Method according to any of the preceding claims, in which the mixing (3) is an abrasive mixing.

5. Method according to any of the preceding claims, in which the mixing (3) lasts for between 15 and 30 minutes.

6. Method according to any of the preceding claims, in which the recovered clay is (re)introduced into a mould manufacture.

7. Method according to claim 1, in which the contaminated raw material is earth coming from an industrial site that contains contaminants.

8. Method according to claim 1 or claim 7, in which the mixing (3) lasts for between 2 and 5 minutes, preferably 2 to 3 minutes.

9. Method according to any of claims 1, 7 and 8, in which the separation (4) of the clay suspension in water on the one hand and residues of clay-depleted raw material on the other hand is a sieving calibrated at 1 mm.

10. Method according to any of claims 1 and 7 to 9, in which an additional separation is carried out before said separate recovery of the clay and water, said additional separation making it possible to isolate small-calibre pebbles, heavy metals and other contaminants present having a density and a specific mass greater than those of clay.

11. Method according to any of claims 7 to 10, in which the recovered clay is next dried, (6) before being reintroduced onto said site.

12. Method according to any of claims 1 to 11, **characterised in that** the recovery step comprises a settling (5, 5') of the clay suspension in the water.

13. Method according to any of claims 1 to 12, **characterised in that** the mixing of the mixing step consists of 51 % to 80 % water, preferably 55 %, advantageously 70 % water.
